**Europäisches Patentamt**

**European Patent Office**

**Office européen des brevets**

(19)

(11) **EP 0 703 431 A2**

(12) **EUROPÄISCHE PATENTANMELDUNG**

(43) Veröffentlichungstag:
27.03.1996 Patentblatt 1996/13

(51) Int. Cl.[6]: **G01C 21/16**, G07C 5/08,
G01P 15/00

(21) Anmeldenummer: 95250233.4

(22) Anmeldetag: 25.09.1995

(84) Benannte Vertragsstaaten:
AT BE CH DE DK ES FR GB IT LI NL SE

(30) Priorität: 23.09.1994 DE 4435014

(71) Anmelder:
• Kolley, Klaus
D-70839 Gerlingen (DE)
• Ebert, Rolf, Prof. Dr. med.
D-01217 Dresden (DE)
• Messelektronik Dresden GmbH
D-01069 Dresden (DE)

• IVB-INGENIEURGESELLSCHAFT VERKEHR
BERLIN GmbH
D-10245 Berlin (DE)

(72) Erfinder: Spende, Peter
D-10785 Berlin (DE)

(74) Vertreter: Christiansen, Henning, Dipl.-Ing.
Patentanwalt
Pacelliallee 43/45
D-14195 Berlin (DE)

(54) **Vorrichtung zur Erfassung von Fortbewegungsvorgängen**

(57) Vorrichtung zur Erfassung eines Fortbewegungsvorganges, insbesondere für den Einsatz mit einem Fahrtschreiber oder Unfalldatenschreiber, mit einem im wesentlichen in der Fortbewegungsrichtung wirksamen Beschleunigungsgeber (5) und einer mit dessen Ausgang verbundenen ersten Auswertungs- und Berechnungseinheit (61 bis 64) zur Berechnung einer Vergleichsgröße zur Kontrolle der Signale eines Weg- oder Geschwindigkeitsgebers (3), dessen Signale zur Dokumentation desselben Fortbewegungsvorganges genutzt werden, anhand der Signale des Beschleunigungsgebers (5), wobei die erste Auswertungs- und Berechnungseinheit (61 bis 64) so ausgebildet ist, daß nicht die Beschleunigung in Fortbewegungsrichtung ($a_W$) repräsentierende Signalanteile (aO) im Signal des Beschleunigungsgebers (5) im wesentlichen eliminiert werden, indem dieses Signal in mindestens zwei kurzen, aufeinanderfolgenden Phasen des Fortbewegungsvorganges aufgenommen und einer vergleichenden Auswertung in diesen Phasen unterzogen wird.

Fig.2

EP 0 703 431 A2

**Beschreibung**

Die Erfindung betrifft eine Vorrichtung der im Oberbegriff des Anspruchs 1 angegebenen Art sowie ein Verfahren zum Betrieb einer solchen Vorrichtung.

Im kommerziellen Personen- und Güterverkehr sind zur Erfassung und Dokumentation der durchgeführten Fahrten Fahrtschreiber üblich. Ihr Gebrauch ist hier seit längerem auch durch gesetzliche Vorschriften geregelt. Die damit gewonnenen Aufzeichnungen stellen ein wichtiges Mittel zur Überwachung der Einhaltung von Verkehrs- und Arbeitsschutzvorschriften dar und liefern bei Verstößen gegen diese oder bei Unfällen Beweismittel, die zur Klärung von Haftungs- und strafrechtlichen Verantwortungen dienen.

In neuerer Zeit finden verwandte Vorrichtungen - mit ähnlicher Zielstellung - als Unfalldatenschreiber Beachtung, wobei hier auch nichtkommerzielle Anwendungen potentiell große Bedeutung haben.

In beiden Einsatzgebieten besteht eine hohe Manipulationsgefahr, die aus der Beweiskraft der Aufzeichnungen bei Verstößen gegen Rechtsvorschriften erwächst. Besonders manipulationsgefährdet sind die Signalgeber, deren Ausgangssignale in die Bestimmung bzw. Aufzeichnung der Fortbewegungsgeschwindigkeit eingehen, bzw. deren Verbindungsstellen mit der Auswertungs- und Aufzeichnungseinheit. So sind Manipulationen am Weggeber, mit denen dessen Impulse mit dem Ziel der Vortäuschung einer niedrigeren als der tatsächlich gefahrenen Geschwindigkeit vefälscht werden, häufig, und sogar das Einschleifen von Ersatz-Impulsquellen anstelle des geeichten Weggebers ist schon vorgekommen.

In der DE 40 22 312 A1 ist ein System und eine Aufnahmevorrichtung zur Analyse von Fahrzeugbewegungsdaten beschrieben, das eine Reihe zusätzlicher Sensoren zur Aufnahme zusätzlicher fahrphysikalischer Daten aufweist. Hiermit soll eine größerer Anzahl von die äußeren Bedingungen des Fahrvorganges betreffenden und ggfs. bei einem Unfall relevanten Daten bereitgestellt werden. Im Hinblick auf das Manipulations-Problem trifft diese Druckschrift jedoch keinerlei Aussagen.

In der DE 38 39 221 ist ein Fahrdatenspeicher beschrieben, der digital arbeitet und dessen gespeicherte Daten zur externen, computergestützten Auswertung verschlüsselt nach außerhalb des Fahrzeuges übertragen werden. Hiermit ist die Verhinderung von Manipulationen im Bereich der Datenaufzeichnung bzw. -speicherung beabsichtigt, die Lösung ist jedoch nicht zur Abwehr von Manipulationen an den Signalgebern geeignet.

Aus der EP 0 553 478 A2 ist eine Einrichtung zum Nachweis von Störungen der Signalübertragung in Kraftfahrzeugen bekannt, mit der Manipulationen im Übertragungsweg zwischen dem Geber eines Fahrtschreibers und dessen Auswertungs- und Registriereinheit verhindert werden sollen. Hierzu ist vorgesehen, die Signale eines Drehwertgebers mittels der Signale mindestens eines fahrtypische Kräfte fühlenden Bewegungsgebers (Beschleunigungssensors) auf Plausibilität zu prüfen. Der Frage, inwieweit Signale des letzteren für den vorgesehenen Zweck geeignet sind bzw. entsprechend aufbereitet werden können, wird nicht nachgegangen.

Aus der EP 0 517 062 A2 sind ein Verfahren und eine Vorrichtung zur fälschungssicheren Erfassung der Radumdrehungszahl von Fahrzeugen bekannt, die sich als Signalgeber eines an einem rotierenden Teil des Antriebs angeordneten und dieses abfühlenden Beschleunigungssensors - bevorzugt zweier solcher Sensoren - bedienen.

Aus der EP 0 322 532 ist eine gattungsgemäße Vorrichtung bekannt. Hier ist auch eine Korrektur des Beschleunigungsgebers um nicht fortbewegungsrelevante Signalanteile vorgesehen, diese erfordert jedoch einen zusätzlichen Lagesensor, und mit diesem gelingt keine umfassende Korrektur.

Der Erfindung liegt daher die Aufgabe zugrunde, eine einfache und in allen Fahrzuständen zuverlässig arbeitende Vorrichtung, mit der die Erkennung und damit Bekämpfung von Manipulationen auf der Signalgeber-Seite von Fahrtschreibern, Unfalldatenschreibern (UDS) und verwandten Geräten möglich ist, sowie ein Betriebsverfahren für eine solche Vorrichtung anzugeben.

Diese Aufgabe wird durch eine Vorrichtung mit den Merkmalen des Anspruchs 1 und ein Verfahren mit den Merkmalen des Anspruchs 11 gelöst.

Die Erfindung schließt den Gedanken ein, zur Kontrolle eines Fahrtschreibers oder UDS einen einzelnen nicht oder nur schwer manipulierbaren und dennoch kostengünstigen Sensor mit zugehöriger Auswertungseinrichtung vorzusehen, dessen Signale in einer vorbestimmten Korrelation zu den Signalen des oder der manipulationsgefährdeten Signalgeber(s) (insbesondere des Weg- oder Geschwindigkeitsgebers) stehen. Als solcher eignet sich aus physikalischer Sicht und unter Kosten-Gesichtspunkten ein im wesentlichen in einer Richtung empfindlicher Beschleunigungssensor, der die zweite Abeitung des Weges nach der Zeit bzw. die erste Ableitung der Geschwindigkeit nach der Zeit in Fortbewegungsrichtung erfaßt.

Die Kontrolle erfolgt in mindestens einer Phase des Bewegungsvorganges, jedoch nicht während dessen gesamten Ablaufes.

Sie schließt weiter den Gedanken ein, die Signale dieses Kontroll-Signalgebers auf eine Weise zu verarbeiten, daß sie unmittelbar mit den Daten des manipulationsgefährdeten Signalgebers vergleichbar werden. Sie schließt letztlich den Gedanken ein, die Kontroll-Signale im Hinblick auf den beabsichtigten Vergleich einer Befreiung von Signalanteilen zu unterziehen, die nicht der Bewegungskomponente in Fortbewegungsrichtung zuzuordnen, mithin nicht mit den Signalen des zu überprüfenden Signalgebers korreliert sind, indem in hinreichend kurzen und hinreichend kurz aufeinanderfolgenden Abschnitten des Fortbewegungsvorganges vergleichend gemessen wird.

In einer im Hinblick auf die Hauptfehlerquelle bei der Kontrolle von Weg- oder Geschwindigkeitsgebersignalen besonders zweckmäßigen Ausführung ist die Auswertungs- und Berechnungseinheit so ausgebildet, daß aus Niveauunterschieden der Fortbewegungsbahn herrührende Signalanteile im Signal des Beschleunigungsgebers im wesentlichen eliminiert werden.

Die Vorrichtung kann in vorteilhafter Weise mit einem Fahrtschreiber, UDS o.ä. integriert gebildet, d.h. ein Zeitgeber (65) und ein Weg- oder ein Geschwindigkeitsgeber (3), eine mit den Ausgängen des Zeitgebers (65) und des Weg- oder des Geschwindigkeitsgebers (3) verbundene zweite Auswertungs-und Berechnungseinheit (67) zur Auswertung der ausgegebenen Zeit- und Weg- oder Geschwindigkeitssignale und zur Berechnung mindestens der Fortbewegungsgeschwindigkeit oder des Weges und eine Aufzeichnungseinheit (4) zur Aufzeichnung von Zeit, Weg und Geschwindigkeit mindestens für einen Abschnitt eines Fortbewegungsvorganges vorgesehen sein.

Die der Kontrollvorrichtung zuzuordnende Auswertungs- und Berechnungseinheit weist in einer elektronischen Realisierung einen Integrator zur Bestimmung der Geschwindigkeitsänderung aus den Signalen des Beschleunigungsgebers in einem ersten sowie einem zweiten vorbestimmten Zeit- oder Wegintervall, einen Zwischenspeicher zur Speicherung der Geschwindigkeitsänderung im ersten Zeit- oder Wegintervall, eine Subtraktionseinheit zur Bildung der Differenz aus den Geschwindigkeitsänderungen im ersten und im zweiten Zeit- oder Wegintervall und eine Vergleichereinheit zum Vergleich dieser Differenz mit der aus den Signalen des Weg- oder Geschwindigkeitsgebers im ersten und zweiten Zeit-oder Wegintervall abgeleiteten Geschwindigkeitsänderung und zur Ausgabe eines das Vergleichsergebnis kennzeichnenden Kontroll-bzw. Verifizierungssignals auf.

Zusätzlich ist zweckmäßigerweise eine eingangsseitig mit dem Ausgang der Vergleichereinheit verbundene Anzeigeeinheit vorgesehen, auf der das Vorliegen eines die Überschreitung einer vorbestimmten zulässigen Differenz zwischen der aus den Signalen des Beschleunigungsgebers und der aus den Signalen des Weg- oder Geschwindigkeitsgebers abgeleiteten Geschwindigkeitsänderung repräsentierenden Verifizierungssignals angezeigt wird. Diese Anzeigeeinheit kann mit einem im Fahrzeug vorhandenen Anzeigeinstrument zusammenhängend realisiert werden, etwa auf dem Fahrtschreiber selbst. Es kann aber auch eine externe, ggfs. auch transportable, Anzeigeeinheit vorgesehen sein

Weiterhin oder alternativ kann eine eingangsseitig mit dem Ausgang der Vergleichereinheit verbundene Korrektureinheit vorgesehen sein, mittels derer in Reaktion auf das Vorliegen eines die Überschreitung einer vorbestimmten zulässigen Differenz zwischen der aus den Signalen des Beschleunigungsgebers und der aus den Signalen des Weg-oder Geschwindigkeitsgebers abgeleiteten Geschwindigkeitsänderung repräsentierenden Verifizierungssignals selbsttätig eine entsprechende Justierung des Weg- oder Geschwindigkeitsgebers oder der ersten Auswertungs- und Berechnungseinheit vorgenommen wird.

Die Korrektureinheit kann darüber hinaus so ausgebildet sein, daß aufgrund einer Messung mit einem geeichten Weg- oder Geschwindigkeitsgeber auch die Verifizierungs-Vorrichtung selbst nachjustiert werden kann, um etwa (vor dem Ersteinsatz) den Einfluß von Bauelementtoleranzen oder (in Anständen während der Nutzung des Gerätes) den Einfluß von Langzeit-Driftvorgängen in der Vorrichtung zu kompensieren.

Um - obgleich die Verifizierungs-Vorrichtung schon von der Funktionsweise her weniger manipulationsgefährdet ist als die herkömmlichen Fahrtschreiber-Baugruppen - diese zusätzlich zu sichern, ist es zweckmäßig, daß der Beschleunigungssensor und die zweite Auswertungs- und Berechnungseinheit vor unbefugtem Zugriff geschützt, insbesondere mit einer Einheit zur Erkennung einer Zugriffsberechtigung und einer mit deren Ausgang verbundenen Sperrvorrichtung versehen, sind. Hier kann u.U. eine herkömmliche Versiegelung genügen; in der spezielleren Ausführung kann die Sicherung etwa ein Codeschloß oder eine Magnet- oder Chipkarten-Zugriffskontrolleinrichtung umfassen.

Bei der Durchführung des Meßverfahrens ist es wesnetlich, daß die der gewinnung der Vergleichswerte zugrundegelegten Zeitintervalle so kurz bestimmt werden, daß bei normalen Fahrbahn- bzw. Flugverhältnissen der auf Niveauunterschiede der Fahr- bzw. Flugbahn zurückzuführende Anteil des Beschleunigungsgeber-Signals als konstant angesehen werden kann.

Zusätzlich kann das im Ergebnis einer Messung gewonnene Vergleichsergebnis einer Plausibilitätsrechnung aufgrund vorgegebener Grenzwerte oder von Werten aus früheren Messungen unterzogen und/oder eine Mittelwertbildung über eine vorgegebene Anzahl voneinander zeitlich beabstandeter Messungen durchgeführt werden, um verfälschende Einflüsse ungewöhnlicher Fahrzustände bzw. Fahrbahnbeschaffenheit auszuschalten.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 eine schematische Darstellung zu Verdeutlichung des Grundgedankens sowie des Hauptproblems bei der Verifizierung von Fahrtschreiber- oder UDS-Daten,

Figur 2 ein vereinfachtes Blockschaltbild der erfindungsgemäßen Vorrichtung in einer Ausführungsform,

Figur 3 ein Blockschaltbild ähnlich Fig. 2 in einer modifizierten Anwendung und

Figur 4(a) bis 4(c) grafische Darstellungen zum Betriebsverfahren der erfindungsgemäßen Anordnung nach einer Ausführungsform.

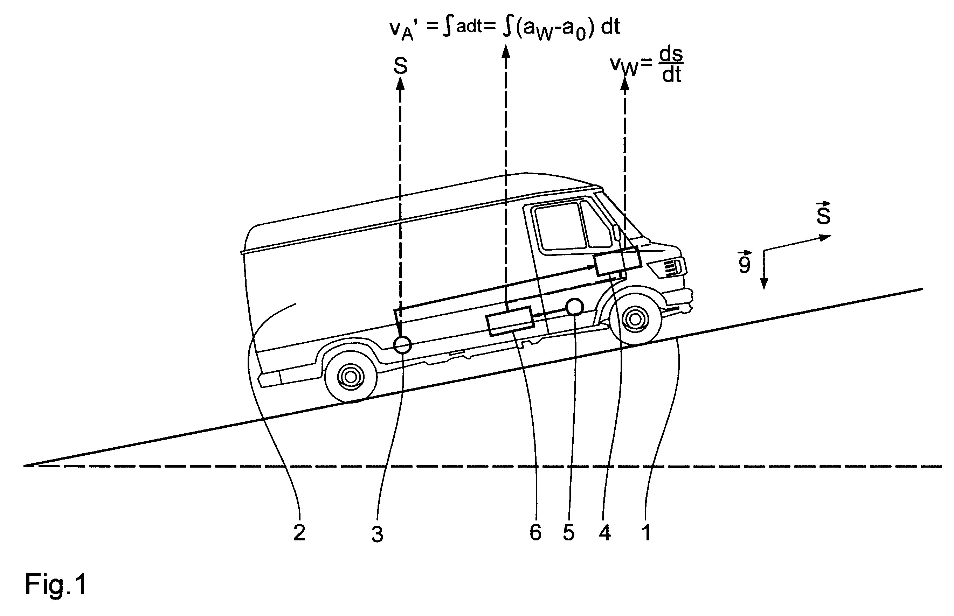

Fig. 1 zeigt ein auf einer ansteigenden Fahrtstrecke 1 befindliches Fahrzeug 2, dessen Fahrtweg s nicht senkrecht zur Erdbeschleunigung g gerichtet ist, wie mit den entsprechenden Vektorpfeilen verdeutlicht ist.

Im Fahrzeug 2 sind ein Weggeber 3 als Aufnehmer eines Fahrtschreibers 4 und ein Beschleunigungssensor 5 als Aufnehmer einer Vorrichtung 6 zur Verifizierung der Fahrtschreiberdaten vorgesehen. Der Weggeber 3 gibt ein die Länge der durch das Fahrzeug 2 zurückgelegten Fahrtstrecke s repräsentierendes Signal ab, aus dem durch Differenzierung (bzw. Division durch die verstrichene Zeit t) der Betrag der (weggeber-gestützten) Fahrgeschwindigkeit $v_W$ ermittelt wird.

Der zur Kontrolle des Weggeber-Signals bzw. der daraus ermittelten Fahrgeschwindigkeit $v_W$ genutzte Beschleunigungssensor 5 gibt ein die auf ihn einwirkende Gesamtbeschleunigung a repräsentierendes Signal ab, das die erste Ableitung einer (beschleunigungsgeber-gestützten) fiktiven Geschwindigkeit $v'_A$ darstellt. Diese stimmt nicht mit der Fahrgeschwindigkeit des Fahrzeuges 2 überein, weil bei (wie in der Figur) ansteigender oder abschüssiger Fahrbahn in a ein aus der Erdbeschleunigung g herrührender Anteil enthalten ist, der häufig als "Offset" des Beschleunigungssensor bezeichnet wird. Das heißt, aus dem Signal des Beschleunigungssensors 5 wird durch Integration über die Zeit (bzw. Summation über verstrichene Zeitintervalle $\Delta t$) eine potentiell falsche fiktive Geschwindigkeit ermittelt.

Somit ist zur Gewinnung der tatsächlichen (beschleunigungsgeber-gestützten) Fahrgeschwindigkeit $v_A$ eine Korrektur des "Offset" nötig. Erst danach ist - zunächst einmal ebgesehen von systematischen Fehlern der konkreten Meßanordnungen - ein Vergleich mit $v_W$ und damit eine Verifizierung des Weggeber- durch das Beschleunigungsgeber-Signal in sinnvoller Weise möglich. Dies gilt analog, wenn im Fahrtschreiber originär ein Geschwindigkeitsgeber eingesetzt wird.

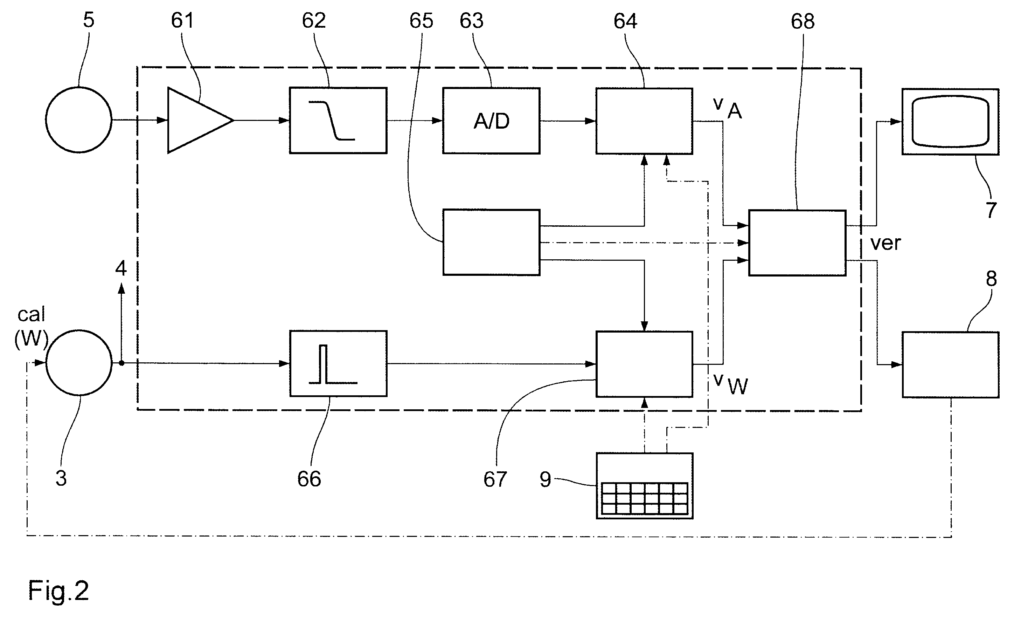

Figur 2 zeigt ein vereinfachtes Blockschaltbild der erfindungsgemäßen Verifizierungs-Vorrichtung in einer Ausführungsform.

Sie umfaßt den Beschleunigungssensor 5, den Weggeber 3 - der zugleich auch dem (hier nicht gezeigten) Fahrtschreiber-Teil zuzurechnen ist - und die Auswertungs- und Berechnungseinheit 6. Angeschlossen sind eine Anzeigeeinheit 7, eine Steuereinheit 8 und eine Bedieneinheit 9, auf die weiter unten zurückgekommen wird.

Der Ausgang des Beschleunigungssensors 5 ist mit dem Eingang eines NF-Verstärkers 61 verbunden, in dem das Signal verstärkt und zugleich eine dem Zweck angepaßte Begrenzung des Meßbereiches von +/- 1,5g auf +/- 0,8g (g = Erdbeschleunigung = 9,81 m/s$^2$) ausgeführt wird. Dessen Ausgang ist mit einem Tiefpaßflter 62 mit einer Grenzfrequenz von ca. 10 Hz verbunden, in dem höherfrequente, störende Signalanteile (etwa aus Fahrzeugschwingungen oder elektrischen Störungen) ausgefiltert werden. Der Ausgang des Tiefpasses 62 ist mit einem 10-Bit-A/D-Wandler 63 verbunden, in dem das Signal des analog arbeitenden Sensors 5 für die weitere Verarbeitung digitalisiert wird. Das digitalisierte Signal wird dem Eingang einer Beschleunigungssignal-Auswertungseinheit 64 zugeführt, in der daraus sowie dem Zeitsignal von einem Zeitgeber 65 (auf weiter unten noch genauer beschriebene Weise) die beschleunigungsgebergestützte (fiktive) Fahrgeschwindigkeit $v_A$ errechnet wird.

Der Ausgang des Weggebers 3, der in vorbestimmten Streckenintervallen (genormt zu 0,1254 m) einen Zählimpuls abgibt, ist mit dem Steuereingang eines Monoflops 66 verbunden, der dazu dient, aus den fahrzeugspezifisch unterschiedlich langen Impulse des Weggebers 3 einheitlich lange Impulse (z.B. 30-μs-Impulse) zu erzeugen. Diese Impulse werden - ebenso wie wiederum die Zeitsignale vom Zeitgeber 65 - einer Weggebersignal-Auswertungseinheit 67 zugeführt, in der die weggeber-gestützte Fahrgeschwindigkeit $v_W$ errechnet wird.

Die in der Beschleunigungssignal-Auswertungseinheit 64 und der Weggebersignal-Auswertungseinheit 67 gewonnenen Werte für $v_A$ bzw. $v_W$ werden jeweils einem Eingang einer Vergleichereinheit zugeführt, in der sie miteinander verglichen werden. Der Ausgang der Vergleichereinheit ist zum einen mit der Anzeigeeinheit 7 zur Anzeige des Vergleichsergebnisses (Kontroll- bzw. Verifizierungssignals "ver") - bzw. auch eines von dessen Wert abhängigen optischen oder akustischen Warnsignals - und zum anderen mit dem Eingang der Steuereinheit 8 verbunden. Diese ist so ausgebildet, daß sie bei Überschreitung einer vorgegebenen Schwelle ein vom Wert des KOntrollsignals "ver" abhängiges Kalibrierungsignal "cal(W)" an den Weggeber 3 abgibt, mit dem dieser wieder korrekt eingestellt wird. Damit werden etwa selbsttätig im Rahmen der Verifizierung - die über die Bedieneinheit 9 veranlaßt wird oder alternativ auch auf vorprogrammierte Weise in regelmäßigen Zeitabständen ablaufen kann - die Folgen einer Manipulation am Weggeber beseitigt.

Je nach Anwendungsfall kann auf die Anzeigeeinheit 7 oder die Steuereinheit 8 auch verzichtet werden. Im ersteren Fall - einem sozusagen heimlich selbstkalibrierenden Fahrtschreiber - bemerkt der Fahrer oder Betreiber des Fahrzeugs das Kontrollergebnis gar nicht. Im letzteren Fall erfolgt nur eine Manipulationsmeldung, aber keine selbsttätige Neukalibrierung, so daß weitere Maßnahmen - auf technischem Gebiet insbesondere die Beseitigung der Manipulation - vom Empfänger der Information veranlaßt werden müssen. Zwischenlösungen sind etwa insofern möglich, als zwar eine Anzeige des Vergleichsergebnisses erfolgt, aber verschlüsselt oder nach extern, so daß der Fahrer oder Betreiber sie nicht wahrnehmen kann.

Die Bedieneinheit 9, über die die Verifizierung ausgelöst wird, kann gleichzeitig als Zugriffssperre ausgebildet sein, indem etwa zum Auslösen der Prüfung und/oder für einen Zugriff zum Sensor 5 und der gesamten Baugruppe 6 die Eingabe einer Identifikationsnummer erforderlich oder eine Magnet- bzw. Chipkarten-Einheit integriert ist.

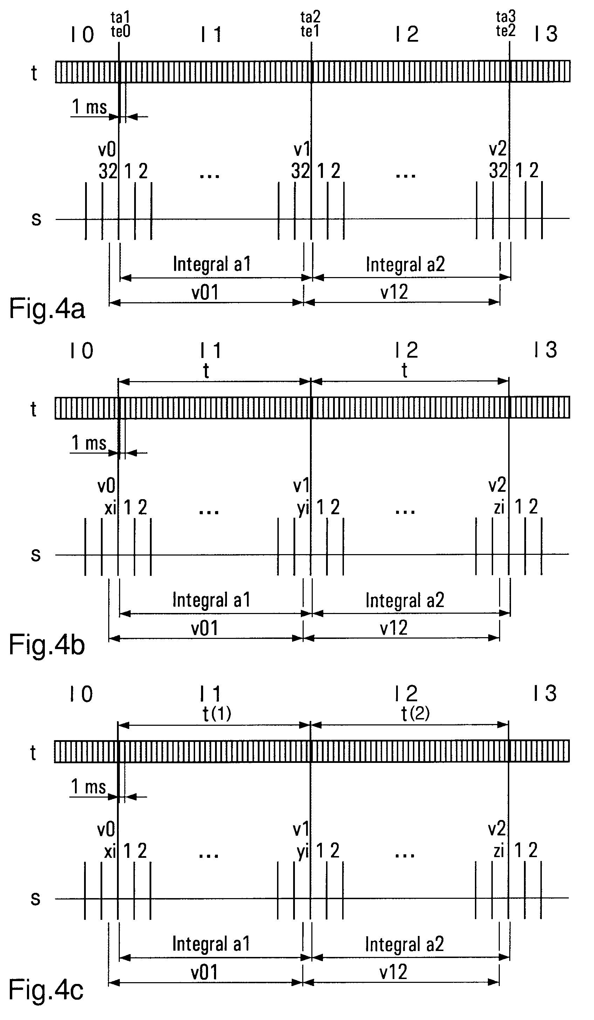

Die Beschleunigungssignal-Auswertungseinheit 64 weist - zur Ausführung der oben grundsätzlich erwähnten, jedoch weiter unten unter Bezugnahme auf Fig. 4(a) bis 4(c) genauer beschriebenen Berechnungen - einen Integrator oder ein Addierglied zur Bestimmung der Geschwindigkeitsänderung aus den Signalen des Beschleunigungsgebers in einem ersten sowie einem zweiten vorbestimmten Zeit- oder Wegintervall, mindestens eine Speichereinheit zur Zwischenspeicherung der Geschwindigkeitsänderung im ersten Zeit- oder Wegintervall und eine Subtraktionsstufe zur Bildung der Differenz aus den Geschwindigkeitsänderungen im ersten und im zweiten Zeit- oder Wegintervall sowie ggfs. - abhängig von der Gleichheit oder Ungleichheit der Meßintervalle - ggfs. zusätzlich arithmetische Stufen auf.

Das Weggeber-Signal kann etwa derart verarbeitet werden, daß es ein Eingangsgatter einer getakteten CPU triggert und damit eine Impulszählung pro Zeiteinheit auslöst, wodurch es einer Differenzierung unterzogen und somit die Geschwindigkeitsdifferenz $\Delta v_W$ im vorgegebene Intervall ermittelt wird. Auch hier wird ein Zwischenspeicher zur Speicherung des Wertes aus dem ersten Intervall und eine Subtraktionsstufe zur Differenzbildung eingesetzt.

Es ist zu beachten, daß die Komponenten zur Verarbeitung der Weggebersignale gleichzeitig Bestandteile des Fahrtschreibers im engeren Sinne sein können - wie im weiteren Sinne die gesamte beschriebene Vorrichtung auch als verbesserter Fahrtschreiber oder UDS angesprochen werden kann.

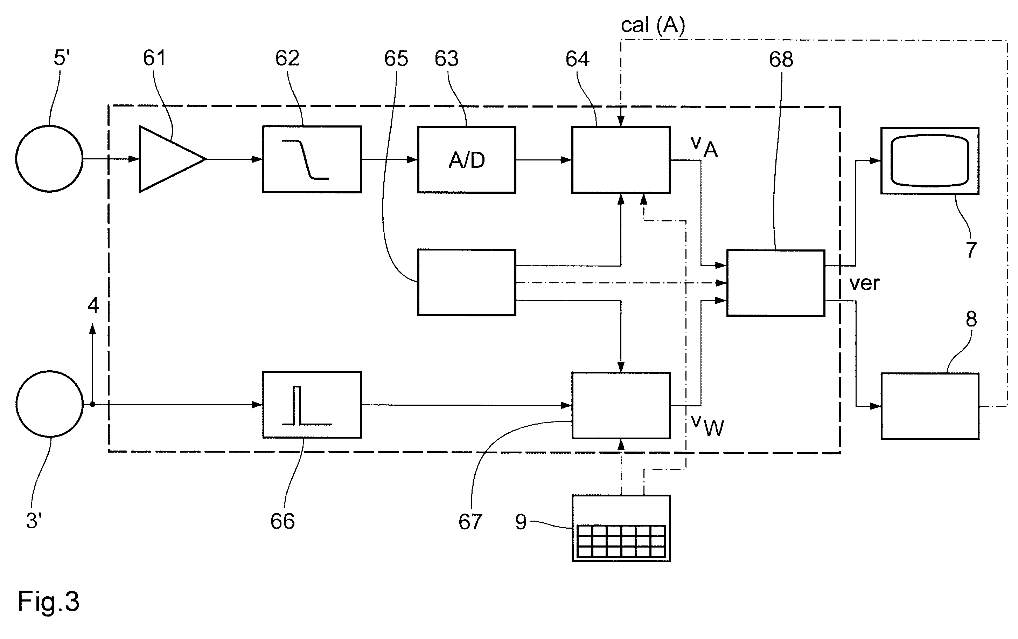

Figur 3 zeigt in einem im wesentlichen Fig. 2 entsprechenden Blockschaltbild die beschriebene Vorrichtung in einer modifizierten Anwendung.

In dieser Figur sind der Weggeber mit 3' und der Beschleunigungsgeber mit 5' bezeichnet, womit symbolisiert werden soll, daß es sich hier - in Umkehrung der Verhältnisse bie Fig. 2 - um einen geeichten Weggeber und einen nicht geeichten Beschleunigungssensor handelt. Der übrigen Aufbau und die Signalverarbeitung sind wie bei der Vorrichtung nach Fig. 2.

Das im Ergebnis der Prüfung gewonnene Kontrollsignal "ver" weist - wenn es von Null verschieden ist - auf eine Abweichung beim Beschleunigungssensor hin, etwa infolge einer Bauelementtoleranz oder eines Alterungsvorganges. Es wird zur Erzeugung eines Kalibrierungssignals für diesen ("cal(A)") in der Steuereinheit 8 genutzt, das der Beschleunigungssignal-Auswertungseinheit 64 zugeführt wird und dort eine den Sensorfehler kompensierende Verarbeitung bewirkt. Falls ein Beschleunigungssenor Verwendung findet, der als solcher kalibrierbar ist, kann (anstelle der Auswertungseinheit) auch diesem ein Kalibrierungssignal zugeführt werden.

Die in Fig. 2 und 3 gezeigten Auswertungseinheiten und weitere Blöcke sind als Funktionseinheiten zu verstehen und können auch zusammenhängend in einer Mikrorechner- bzw PC-Konfiguration gebidet sein, wobei dann eine softwaregesteuerte Abarbeitung des Betriebsverfahrens erfolgt.

Für die praktische Realisierung der Kontrolle bzw. Verifizierung ist es wesentlich, daß die der Verifizierung dienenden Messungen in einem Fahrzustand gemacht werden, in dem der Offset während der zur Auswertung herangezogenen Zeitintervalle als konstant angesehen werden kann. Dies wird dadurch ermöglicht, daß über kurze Zeitintervalle gemessen und integriert wird, in denen der Offset $a_O$ sich in einem einigermaßen normalen Fahrzustand nur wenig ändern kann.

Die Offset-Anteile des Signals mitteln sich dann beim Vergleich der Meßwerte annähernd aus.

Dabei können die Meßintervalle als gleichgroße oder ungleich große Zeitintervalle (abgeleitet aus Signalen des Zeitgebers) oder als gleichgroße oder ungleich große Wegintervalle (abgeleitet aus Signalen des Weggebers) vorgegeben werden - solange diese nur hinreichend kurz sind. (Bei der praktischen Erprobung wurden Meßintervalle im Bereich von etwa 4 bis 5 m Fortbewegungsstrecke gewählt, die bei üblichen Fahrbahnneigungen die Annahme annähernder Konstanz des Offset rechtfertigen.) Insbesondere sollten die Meßintervalle direkt aufeinander folgen.

Die drei grundsätzlichen Varianten (a = ungleiche Zeitintevalle bei gleichen Wegintervallen, b = gleiche Zeitintervalle bei ungleichen Wegintervallen und c = ungleiche Zeit- und Wegintervalle) werden in den Figuren 4a bis 4c anhand einer Gegenüberstellung der Zeitachse t mit einer Abtastimpulsfolge (jeweils im oberen Teil) un der Wegstrecke s mit der jeweiligen Anzahl der Weggebersignale in Intervallen I0 bis I3 schematisch verdeutlicht. Dabei ist in Fig. 4a gezeigt, daß der Anfangspunkt des Meßintervalls I2 auf der Zeitachse t ($t_{a2}$) mit dem Endpunkt der Meßintervalls 1 ($t_{e1}$) zusammenfällt.

Es gelten (unter Bezugnahme auf die Figuren) die folgenden mathematischen Beziehungen:

$$|v_{01} - v_{12}| = |v_{a1} - v_{a2}| \qquad (1a)$$

worin $v_{01}$, $v_{12}$ bzw. $v_{a1}$, $v_{a2}$ die weggeber-gestützt bzw. die beschleunigungsgeber-gestützt ermittelte Geschwindigkeitsänderung im ersten bzw. zweiten Meßintervall ist, für einwandfrei arbeitende Geber bzw.

$$K \cdot |v_{01} - v_{12}| = |v_{a1} - v_{a2}| \qquad (1b)$$

mit einem Korrekturfaktor K für einen nicht einwandfrei arbeitenden Geber, z.B. einen manipulierten Weggeber.

Mit

$$v_{a1} = \int_{t_{a1}}^{t_{e1}} a\,dt \approx \sum_{i=1}^{n_1} a_i \Delta t, \quad v_{a2} = \int_{t_{a2}}^{t_{e2}} a\,dt \approx \sum_{k=1}^{n_2} a_k \Delta t \tag{2}$$

und

$$a = a_F + a_O \tag{3},$$

worin a das Beschleunigungssignal, $a_F$ dessen für die Verifizierung des Weggebersignals relevanter Anteil in Fortbewegungsrichtung und $a_O$ der Offset-Anteil sind, ergibt sich im angenommenen Fall $a_O = const.$ für gleichgroße Zeitintervalle, d.h. $n_1 = n_2$, (vgl. Fig. 4b) zunächst ohne weiteres aus

$$|v_{a1} - v_{a2}| = |\sum_{i=1}^{n_1} (a_F + a_O)_i \Delta t - \sum_{k=1}^{n_1} (a_F + a_O)_k \Delta t| \tag{4}$$

wegen $a_{Oi} = a_{Ok}$

$$|v_{a1} - v_{a2}| = |\sum_{i=1}^{n_1} a_{Fi} \Delta t - \sum_{k=1}^{n_1} a_{Fi} \Delta t| \tag{5},$$

womit der Offset-Anteil des Beschleunigungssignals eliminiert ist.

Die weggeber-gestützte Geschwindigkeit wird jeweils aus der dem Abstand zwischen zwei Weggeberimpulsen entsprechenden (festen, gemäß Eichung 0,1254 m betragenden) Wegstrecke s und der Zeitdauer t(m0), t(m1) und t(m2) des letzten Abschnitts zwischen zwei Weggeberimpulsen in jedem der Meßintervalle 0, 1 und 2 mit

$$v_{01} = s/t(m1) - s/t(m0), \quad v_{12} = s/t(m2) - s/t(m1) \tag{6}$$

berechnet.

Damit läßt sich der Korrekturfaktor K gemäß Gl. (1b) berechnen, ohne daß Offset-Einflüsse verfälschend in die Berechnung eingehen. Weicht der errechnete Wert deutlich von 1 ab, so ist - ein technisch einwandfrei arbeitender Beschleunigungsgeber vorausgesetzt - vom Vorliegen einer Funktionsbeeinträchtigung (Manipulation) am Weggeber bzw. in der diesem zugehörigen Verarbeitungseinheit auszugehen.

Für den in Fig. 4a dargestellten Fall ungleich langer Zeitintervalle bei gleich langen Wegstrecken (gleiche Anzahl von 32 Weggeberimpulsen in den Meßintervallen I1 und I2) bzw. den in Fig. 4c dargestellten Fall ungleich langer Zeit- und Wegintervalle lassen sich aufgrund der oben angegebenen Beziehungen (1a) bis (6) für den Fachmann ohne weiteres ableitbare Berechnungen durchführen, in deren Ergebnis man $a_O$ und K getrennt voneinander erhält.

Sollte zufällig in einem Fahrzustand mit sehr schnellen Offset-Schwankungen gemessen worden sein - etwa auf sehr holperiger Straße, während des Überfahrens von Bordsteinkanten o.ä. - , so können unkorrekte Schlußfolgerungen aus den Ergebnissen durch eine Plausibilitätsbetrachtung oder durch eine zusätzliche Mittelung über die Ergebnisse mehrerer, in Abständen durchgeführter Meßreihen vermieden werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

**Patentansprüche**

1. Vorrichtung zur Erfassung eines Fortbewegungsvorganges, insbesondere für den Einsatz mit einem Fahrtschreiber oder Unfalldatenschreiber, mit einem im wesentlichen in der Fortbewegungsrichtung wirksamen Beschleunigungsgeber (5) und einer mit dessen Ausgang verbundenen ersten Auswertungs- und Berechnungseinheit (61 bis 64) zur Berechnung einer Vergleichsgröße zur Kontrolle der Signale eines Weg- oder Geschwindigkeitsgebers (3), dessen Signale zur Dokumentation desselben Fortbewegungsvorganges genutzt werden, anhand der Signale des Beschleunigungsgebers (5),
**dadurch gekennzeichnet,** daß
die erste Auswertungs- und Berechnungseinheit (61 bis 64) so ausgebildet ist, daß nicht die Beschleunigung in Fortbewegungsrichtung ($a_W$) repräsentierende Signalanteile (aO) im Signal des Beschleunigungsgebers (5) im wesentlichen eliminiert werden, indem dieses Signal in mindestens zwei kurzen, aufeinanderfolgenden Phasen des Fortbewegungsvorganges aufgenommen und einer vergleichenden Auswertung in diesen Phasen unterzogen wird.

2. Vorrichtung nach Anspruch 1, **dadurch gekennzeichnet,** daß die erste Auswertungs- und Berechnungseinheit (61 bis 64) so ausgebildet ist, daß aus Niveauunterschieden der Fortbewegungsbahn herrührende Signalanteile im Signal des Beschleunigungsgebers (5) im wesentlichen eliminiert werden.

3. Vorrichtung nach Anspruch 1 oder 2, **dadurch gekennzeichnet,** daß ein Zeitgeber (65) und ein Weg- oder ein Geschwindigkeitsgeber (3), eine mit den Ausgängen des Zeitgebers (65) und des Weg- oder des Geschwindigkeitsgebers (3) verbundene zweite Auswertungs- und Berechnungseinheit (67) zur Auswertung der ausgegebenen Zeit- und Weg- oder Geschwindigkeitssignale und zur Berechnung mindestens der Fortbewegungsgeschwindigkeit oder des Weges und eine Aufzeichnungseinheit (4) zur Aufzeichnung von Zeit, Weg und Geschwindigkeit mindestens für einen Abschnitt eines Fortbewegungsvorganges vorgesehen sind.

4. Vorrichtung nach einem der vorangehenden Ansprüche, **dadurch gekennzeichnet,** daß die erste Auswertungs- und Berechnungseinheit einen mit dem Ausgang des Beschleunigungsgebers (5) verbundenen Verstärker (61), einen mit dessen Ausgang verbundenen Tiefpaß (62), einen mit dessen Ausgang verbundenen A/D-Wandler (63) und eine Beschleunigungssignal-Auswertungseinheit (64) zur Bestimmung der Geschwindigkeitsänderung aus den Signalen des Beschleunigungsgebers in einem ersten sowie einem zweiten vorbestimmten Zeit- oder Wegintervall, Zwischenspeicherung der Geschwindigkeitsänderung im ersten Zeit- oder Wegintervall und Bildung der Differenz aus den Geschwindigkeitsänderungen im ersten und im zweiten Zeit- oder Wegintervall aufweist und deren Ausgang mit einem Eingang einer Vergleichereinheit (68) verbunden ist, deren anderer Eingang mit dem Ausgang einer Weggebersignal-Auswertungseinheit (67) verbunden ist, die das, ggfs. aufbereitete, Signal des Weg- oder Geschwindigkeitsgebers (3) aufnimmt und aus diesem im ersten und zweiten Zeit- oder Wegintervall eine Geschwindigkeitsänderung bestimmt und die ein das Vergleichsergebnis beider Geschwindigkeitsänderungen kennzeichnendes Kontrollsignal (ver) ausgibt.

5. Vorrichtung nach Anspruch 4, **dadurch gekennzeichnet,** daß eine eingangsseitig mit dem Ausgang der Vergleichereinheit (68) verbundene Anzeigeeinheit (7) vorgesehen ist, auf der das Vorliegen eines die Überschreitung einer vorbestimmten zulässigen Differenz zwischen der aus den Signalen des Beschleunigungsgebers (5) und der aus den Signalen des Weg- oder Geschwindigkeitsgebers (3) abgeleiteten Geschwindigkeitsänderung repräsentierenden Kontrollsignals (ver) angezeigt wird.

6. Vorrichtung nach Anspruch 5, **dadurch gekennzeichnet,** daß die Anzeigeeinheit (7) so ausgebildet ist, daß aufgrund der Signale des Beschleunigungsgebers (5) die Anzeige und/oder Dokumentation einer Fortbewegung erfolgt, insbesondere auch wenn aufgrund der Signale des Weg- oder Geschwindigkeitsgebers (3) ein Stillstand angezeigt wird.

7. Vorrichtung nach einem der Ansprüche 4 bis 6, **dadurch gekennzeichnet,** daß eine eingangsseitig mit dem Ausgang der Vergleichereinheit (68) verbundene Korrektureinheit (8) vorgesehen ist, mittels derer in Reaktion auf das Vorliegen eines die Überschreitung einer vorbestimmten zulässigen Differenz zwischen der aus den Signalen des Beschleunigungsgebers (5) und der aus den Signalen des Weg- oder Geschwindigkeitsgebers (3) abgeleiteten Geschwindigkeitsänderung repräsentierenden Kontrollsignals (ver) selbsttätig eine entsprechende Justierung des Weg- oder Geschwindigkeitsgebers (3) oder der zweiten Auswertungs-und Berechnungseinheit (67) vorgenommen wird.

8. Vorrichtung nach Anspruch 7, **dadurch gekennzeichnet,** daß die Korrektureinheit (8) so ausgebildet ist, daß aufgrund einer Messung mit einem geeichten Weg- oder Geschwindigkeitsgeber ein Eichsignal (cal(A)) zur Nachjustierung des Beschleunigungsgebers (5) und/oder der ersten Auswertungs- und Berechnungseinheit (61 bis 64) abgeleitet werden kann.

9. Vorrichtung nach einem der vorangehenden Ansprüche, **dadurch gekennzeichnet,** daß der Beschleunigungsgeber (5) und die erste Auswertungs- und Berechnungseinheit (61 bis 64) vor unbefugtem Zugriff geschützt, insbesondere mit einer Einheit (9) zur Erkennung einer Zugriffsberechtigung und einer mit deren Ausgang verbundenen Sperrvorrichtung, versehen sind.

10. Vorrichtung nach einem der Ansprüche 3 bis 9, **dadurch gekennzeichnet,** daß mindestens Teile der zweiten Auswertungs- und Berechnungseinheit (67) gleichzeitig Teile der Weggebersignal-Auswertungseinheit (67) darstellen.

11. Verfahren zum Betrieb einer Vorrichtung zur Dokumentation eines Fortbewegungsvorganges, insbesondere eines Fahrtschreibers oder Unfalldatenschreibers, mit einem Zeitgeber (65) und einem Weg- oder einem Geschwindigkeitsgeber (3), einer mit den Ausgängen des Zeitgebers und des Weg- oder des Geschwindigkeitsgebers verbundenen Auswertungs- und Berechnungseinheit (67) zur Auswertung der an diesen ausgegebenen Zeit- und Weg- oder Geschwindigkeitssignale und zur Berechnung mindestens der Fortbewegungsgeschwindigkeit oder des Weges und einer Aufzeichnungseinheit (4) zur Aufzeichnung von Zeit, Weg und Geschwindigkeit mindestens für einen Abschnitt des Fortbewegungsvorganges, sowie einem im wesentlichen nur in Fortbewegungsrichtung fühlenden Beschleunigungsgeber (5) und einer mit dessen Ausgang verbundenen zusätzlichen Auswertungs- und Berechnungseinheit (64), die ein Kontrollsignal zur Verifikation der Signale des Weg- oder des Geschwindigkeitsgebers (3) aus Signalen des Beschleunigungsgebers (5) erzeugt

**dadurch gekennzeichnet,** daß

die Signale des Beschleunigungsgebers (5) in mindestens zwei kurzen, aufeinanderfolgenden Abschnitten des Fortbewegungsvorganges aufgenommen und einer vergleichenden Auswertung unterzogen werden, wodurch aus nicht in Fortbewegungsrichtung wirkenden Beschleunigungen resultierende Signalanteile eliminiert werden.

12. Verfahren nach Anspruch 11, **dadurch gekennzeichnet,** daß aus Niveauunterschieden der Fortbewegungsbahn herrührende Signalanteile im Signal des Beschleunigungsgebers (5) im wesentlichen eliminiert werden.

13. Verfahren nach Anspruch 11 oder 12, **dadurch gekennzeichnet,** daß aus den Signalen des Beschleunigungsgebers (5) in einem ersten sowie einem zweiten vorbestimmten Zeit- oder Wegintervall jeweils eine Geschwindigkeitsänderung bestimmt, anschließend die Differenz aus den Geschwindigkeitsänderungen errechnet, diese Differenz mit der aus den Signalen des Weg- oder Geschwindigkeitsgebers (3) im ersten und zweiten Zeit- oder Wegintervall abgeleiteten Geschwindigkeitsänderung verglichen und ein das Vergleichsergebnis kennzeichnendes Kontrollsignal (ver) bereitgestellt wird.

14. Verfahren nach Anspruch 13, **dadurch gekennzeichnet,** daß das Vorliegen eines die Überschreitung einer vorbestimmten zulässigen Differenz zwischen der aus den Signalen des Beschleunigungsgebers (5) und der aus den Signalen des Weg- oder Geschwindigkeitsgebers (3) abgeleiteten Geschwindigkeitsänderung repräsentierenden Kontrollsignals und wahlweise der aus den Signalen des Beschleunigungsgebers abgeleitete Zustand der Fortbewegung optisch oder akustisch angezeigt wird.

15. Verfahren nach einem der Ansprüche 11 bis 14, **dadurch gekennzeichnet,** daß in Reaktion auf das Vorliegen eines die Überschreitung einer vorbestimmten zulässigen Differenz zwischen der aus den Signalen des Beschleunigungsgebers (5) und der aus den Signalen des Weg- oder Geschwindigkeitsgebers (3) abgeleiteten Geschwindigkeitsänderung repräsentierenden Kontrollsignals (ver) selbsttätig eine Justierung des Weg- oder Geschwindigkeitsgebers (3) oder der zusätzlichen Auswertungs- und Berechnungseinheit (67) vorgenommen wird.

16. Verfahren nach einem der Ansprüche 11 bis 15, **dadurch gekennzeichnet,** daß das erste und zweite vorbestimmte Zeitintervall so kurz bestimmt werden, daß bei einer normalen Fortbewegungsbahn der auf Niveauunterschiede dieser zurückzuführende Anteil des Beschleunigungsgeber-Signals als konstant angesehen werden kann.

17. Verfahren nach einem der Ansprüche 11 bis 16, **dadurch gekennzeichnet,** daß das im Ergebnis einer Messung gewonnene Vergleichsergebnis einer Plausibilitätsrechnung aufgrund vorgegebener Grenzwerte oder von Werten aus früheren Messungen unterzogen und/oder eine Mittelwertbildung über eine vorgegebene Anzahl voneinander zeitlich beabstandeter Messungen durchgeführt wird.

Fig.1

$$v_A' = \int a\,dt = \int (a_W - a_0)\, dt$$

$$v_W = \frac{ds}{dt}$$

Fig.2

EP 0 703 431 A2

Fig.3

Fig.4a

Fig.4b

Fig.4c